# EUROPÄISCHE PATENTSCHRIFT

(11) **EP 2 960 741 B1**
(45) Veröffentlichungstag und Bekanntmachung des Hinweises auf die Patenterteilung: **19.04.2023**
(21) Anmeldenummer: 15170499.6
(22) Anmeldetag: 03.06.2015
(51) Int. Cl.: E04H 4/16, G01S 5/30, G05D 1/02, G01S 17/931

(54) **AUTONOMER SERVICEROBOTER**
AUTONOMOUS SERVICE ROBOT
ROBOT DE SERVICE

(30) Priorität: 27.06.2014 DE 102014212418
(43) Veröffentlichungstag der Anmeldung: 30.12.2015
(73) Patentinhaber: Robert Bosch GmbH, 70442 Stuttgart (DE)
(72) Erfinder: Biber, Peter, 72119 Poltringen (DE); Hensel, Stefan, 77836 Rheinmuenster (DE)

(56) Entgegenhaltungen:
- EP-A1- 2 680 097
- WO-A2-2006/026436
- US-A- 5 995 884
- US-A1- 2006 076 039
- US-A1- 2010 063 648
- US-A1- 2012 182 392
- US-A1- 2013 211 672
- US-A1- 2013 261 871
- US-A1- 2014 124 004
- Dr.-Ing Thorsten Ringbeck: "Optical 3-D Measurement Techniques 09-12.07.2007 ETH Zürich Plenary Session 1: Range Imaging I A 3D TIME OF FLIGHT CAMERA FOR OBJECT DETECTION", , 12. Juli 2007 (2007-07-12), Seiten 1-10, XP055272295, Gefunden im Internet: URL:http://ifm.hk/obj/O1D_Paper-PMD.pdf [gefunden am 2016-05-12]

## Beschreibung

### Stand der Technik

Es ist bereits ein autonomer Serviceroboter nach dem Oberbegriff des Anspruchs 1 vorgeschlagen worden. Beispielsweise wird auf die Druckschrift US 2013/0261871 A1 verwiesen.

### Offenbarung der Erfindung

Die Erfindung betrifft einem autonomen Serviceroboter mit den Merkmalen des Anspruchs 1. Vorzugsweise ist die optische Erfassungsvorrichtung zumindest teilweise zu einer räumlichen Umfelderfassung vorgesehen. Unter "autonom" soll in diesem Zusammenhang insbesondere "eigenständig arbeitend" verstanden werden. Vorzugsweise verrichtet der autonome Serviceroboter in einem Betriebszustand eine Arbeit zumindest zu einem Großteil unabhängig von einem Eingreifen durch einen Bediener. In einem besonders bevorzugten Ausführungsbeispiel ist der autonome Serviceroboter dazu vorgesehen, die Arbeit zumindest teilweise selbsttätig zu beginnen oder selbsttätig zu beenden und/oder zumindest teilweise selbsttätig zumindest einen Parameter, wie insbesondere einen Streckenparameter, und/oder einen Umkehrpunkt usw. auszuwählen. Besonders bevorzugt ist der autonome Serviceroboter zumindest teilweise dazu vorgesehen, zumindest eine Dienstleistung für einen Bediener und/oder Menschen im Allgemeinen zu erbringen. Der autonome Serviceroboter kann vorzugsweise auf verschiedene, dem Fachmann als sinnvoll erscheinende Arten ausgebildet sein, wie insbesondere als eine autonome Kehrmaschine, ein autonomer Staubsauger, eine autonome Schwimmbadreinigungsmaschine, ein autonomer Bodenwischroboter und/oder besonders bevorzugt ein autonomer Rasenmäher. Grundsätzlich sind jedoch auch andere, einem Fachmann als sinnvoll erscheinende autonome Serviceroboter denkbar.

Unter einer "Umfelderfassung" soll in diesem Zusammenhang insbesondere eine, insbesondere virtuelle, Erfassung zumindest eines für eine Umgebung, insbesondere für einen Arbeitsbereich, des autonomen Serviceroboters charakterisierenden Parameters verstanden werden. Vorzugsweise umfasst die Umfelderfassung zumindest eine Ebenen- bzw. Stufenerkennung (Cliff Detection), eine Hinderniserkennung und/oder eine andere, einem Fachmann als sinnvoll erscheinende Funktion. Erfindungsgemäß ist die optische Erfassungsvorrichtung zu einer Erstellung einer, topographischen, Karte vorgesehen, die Informationen zu Höhen und/oder Maßstab und/oder Untergrundbeschaffenheiten und möglichen Hindernissen aus dem Arbeitsbereich und/oder Arbeitsbereichsgrenzen, insb. natürliche Arbeitsbereichsgrenzen, umfasst.

Unter einer "Laufzeitmessung" soll in diesem Zusammenhang insbesondere ein Verfahren zur, insbesondere indirekten, Bestimmung einer Distanz zumindest teilweise durch eine Messung einer Zeit, die ein Signal für ein Durchlaufen der Messstrecke benötigt, verstanden werden. Vorzugsweise wird bei der Laufzeitmessung die Zeit gemessen, die das Signal von einer Aussendung bis zu einer Rückkehr durch eine Reflexion benötigt. Das Signal weist vorzugsweise eine zumindest nahezu kontinuierliche Modulation auf, über deren Auswertung die Laufzeit vorteilhaft bestimmt werden kann. Es sind jedoch auch andere, einem Fachmann als sinnvoll erscheinende Ausgestaltungen des Signals, wie beispielsweise als Schall, denkbar.

Unter "vorgesehen" soll insbesondere speziell ausgestaltet, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung des autonomen Serviceroboters kann vorteilhaft einfach eine Arbeitsbereichserfassung erfolgen und eine bevorzugt präzise und vorteilhaft zuverlässige Führung des autonomen Serviceroboters, insbesondere innerhalb eines Arbeitsbereichs des autonomen Serviceroboters, erreicht werden. Vorzugweise kann insbesondere ein Verlegen bzw. ein Einrichten einer physikalischen Grenze vermieden werden, wodurch wiederum insbesondere ein Arbeitsaufwand gering gehalten werden kann.

Vorzugsweise kann die optische Erfassungsvorrichtung des autonomen Serviceroboters eine Steuer- und/oder Regeleinheit umfassen, die zu einer Auswertung zumindest einer erfassten Information vorgesehen ist. Unter einer "Steuer- und/oder Regeleinheit" soll in diesem Zusammenhang insbesondere eine Einheit verstanden werden, die zumindest teilweise zu einer, insbesondere von einem Bediener unabhängigen, aktiven Beeinflussung und/oder aktiven Anpassung und/oder, insbesondere dynamischen, Veränderung eines Betriebs des autonomen Serviceroboters vorzugsweise entsprechend eines Algorithmus vorgesehen ist. Vorzugsweise umfasst die Steuer- und/oder Regeleinheit eine Prozessoreinheit und eine Speichereinheit sowie zumindest ein in der Speichereinheit gespeichertes Betriebsprogramm. Ferner soll in diesem Zusammenhang unter einer "Speichereinheit" insbesondere eine Einheit verstanden werden, die dazu vorgesehen ist, zumindest eine Information, vorteilhaft von einer Stromversorgung unabhängig, zu speichern. Dadurch kann vorteilhaft ein Verarbeiten der zumindest einen erfassten Information direkt auf dem autonomen Serviceroboter erfolgen.

Zudem wird vorgeschlagen, dass die optische Erfassungsvorrichtung zumindest teilweise zu einer Ebenen- und/oder Hinderniserfassung vorgesehen ist. Unter einer "Ebenen- und/oder Hinderniserfassung" soll in diesem Zusammenhang insbesondere eine Erkennung einer flächigen Erstreckung des Bearbeitungsbereichs des autonomen Serviceroboters, insbesondere zu einer Erkennung einer Abweichung einer ebenen Ausgestaltung des Bearbeitungsbereichs des autonomen Serviceroboters, wie beispielsweise eine Stufe oder ein anderes, einem Fachmann als sinnvoll erscheinendes Hindernis, verstanden werden. Dadurch kann eine vorteilhaft zuverlässige Orientierung des autonomen Serviceroboters innerhalb des Arbeitsbereichs in einem Betriebszustand erreicht werden.

Des Weiteren wird vorgeschlagen, dass die optische Erfassungsvorrichtung zumindest ein Weitwinkeloptikelement und/oder ein Zoomelement umfasst. Unter einem "Weitwinkeloptikelement" soll in diesem Zusammenhang insbesondere ein Element verstanden werden, das dazu vorgesehen ist, einen Bildbereich innerhalb eines Winkels zu erfassen, der größer ist, als es dem natürlichen Eindruck des menschlichen Auges entspricht. Das zumindest eine Weitwinkeloptikelement der optischen Erfassungsvorrichtung ist vorzugsweise dazu vorgesehen, einen diagonalen Bildwinkel zu erfassen, der insbesondere zumindest 60 °, vorzugsweise zumindest 70 °, bevorzugt zumindest 80 ° und besonders bevorzugt zumindest 90 ° beträgt. Es sind jedoch auch andere, insbesondere größere, einem Fachmann als sinnvoll erscheinende Werte des diagonalen Bildwinkels des zumindest einen Weitwinkeloptikelements denkbar. Unter einem "Zoomelement" soll in diesem Zusammenhang insbesondere ein Element verstanden werden, das eine variable Brennweite aufweist und das zu einem Vergrößern und/oder Verkleinern zumindest eines Teils eines von der optischen Erfassungsvorrichtung erfassten Bildausschnitts vorgesehen ist. Das Zoomelement kann optisch oder digital ausgebildet sein. Es sind jedoch auch andere, einem Fachmann als sinnvoll erscheinende Ausgestaltungen des Zoomelements denkbar. Dadurch kann auf konstruktiv einfache und bevorzugt kostengünstige Weise ein vorteilhaft großes Sichtfeld des Erfassungsbereichs in einem Betriebszustand des autonomen Serviceroboters abgedeckt werden.

Ferner wird vorgeschlagen, dass die optische Erfassungsvorrichtung zumindest eine Time-of-Flight-Kamera umfasst. Unter einer "Time-of-Flight-Kamera" soll in diesem Zusammenhang insbesondere ein 3D-Kamerasystem zu einer Ausführung eines Laufzeitmessverfahrens verstanden werden, das insbesondere eine Beleuchtungseinheit zu einer Aussendung von Licht, zumindest eine Optik zu einem Sammeln des reflektierten Lichts der Beleuchtungseinheit und zumindest ein Sensorelement zu einer Erfassung einer Phasenverschiebung des reflektierten Lichts der Beleuchtungseinheit umfasst. Vorzugsweise ist die Time-of-Flight-Kamera dazu vorgesehen, einen Lichtimpuls in mehrere Richtungen gleichzeitig auszusenden und eine Laufzeit eines reflektierenden Anteils eines moduliert ausgebildeten Lichtsignals aus den verschiedenen Richtungen zu messen. Insbesondere ist die Time-of-Flight-Kamera zu einer insbesondere dreidimensionalen Erfassung jeweils einer Distanz zu zumindest zwei Punkten zumindest teilweise mittels eines Lichtpulses vorgesehen, wobei eine Interferenz des ausgesendeten Lichtpulses und des reflektierten Lichtpulses erfasst und daraus jeweils die Distanz zu den zumindest zwei Punkten ermittelt wird. In einem besonders bevorzugten Ausführungsbeispiel weist die Time-of-Flight-Kamera eine größte Erstreckung insbesondere von maximal 50 mm, vorzugsweise von maximal 40 mm und besonders bevorzugt von maximal 35 mm auf. Dadurch kann eine vorteilhaft kompakte und bevorzugt kostengünstige Ausgestaltung der optischen Erfassungsvorrichtung sowie eine vorteilhaft präzise Umfelderfassung erreicht werden.

Zudem wird vorgeschlagen, dass die optische Erfassungsvorrichtung zumindest einen Laserscanner umfasst. Unter einem "Laserscanner" soll in diesem Zusammenhang insbesondere ein Element oder eine Baugruppe verstanden werden, das/die zu einer zeilen- und/oder rasterartigen Abtastung von Oberflächen oder Körpern, insbesondere der Umgebung des autonomen Serviceroboters, mit zumindest einem Laserstrahl vorgesehen ist, um die Umgebung des autonomen Serviceroboters zu vermessen und/oder um zumindest teilweise ein Bild der Umgebung des autonomen Serviceroboters zu erzeugen. Der Laserscanner umfasst vorzugsweise zumindest einen Sensor, der zu einer Ab- und/oder Umlenkung des zumindest einen ausgesandten Laserstrahls vorgesehen ist. In einem besonders bevorzugten Ausführungsbeispiel ist der Laserscanner als abbildender Laserscanner ausgebildet, der dazu vorgesehen ist, neben der Objektgeometrie zusätzlich die Intensität des reflektierten Signals zu erfassen. Dadurch kann eine vorteilhaft kostengünstige und bevorzugt einfache Ausgestaltung der optischen Erfassungsvorrichtung erreicht werden.

Vorteilhafterweise umfasst die optische Erfassungsvorrichtung zumindest ein Beleuchtungselement, das zumindest teilweise zu einer Ausleuchtung eines Erfassungsbereichs der optischen Erfassungsvorrichtung vorgesehen ist. Somit kann vorteilhaft ein Kontrast zu einer Erkennung von Unebenheiten genutzt werden. Zudem kann vorteilhaft eine Erfassung von Daten in schlecht ausgeleuchteten Teilbereichen des Arbeitsbereichs und/oder bei Dunkelheit ermöglicht werden.

Des Weiteren wird vorgeschlagen, dass die optische Erfassungsvorrichtung zumindest ein Beleuchtungselement umfasst, das zumindest teilweise zu einer Ausleuchtung eines Erfassungsbereichs der optischen Erfassungsvorrichtung zumindest teilweise mittels eines gepulsten Lichts vorgesehen ist. Unter einer "Ausleuchtung" soll in diesem Zusammenhang insbesondere eine Aussendung von Licht zumindest in den Erfassungsbereich der optischen Erfassungsvorrichtung verstanden werden. Unter "gepulst" soll in diesem Zusammenhang insbesondere verstanden werden, dass das Licht in einzelnen Impulsen ausgesendet wird, die eine Pulsdauer insbesondere von zumindest nahezu 50 ns und/oder eine Frequenz von insbesondere zumindest 100 Hz, vorzugsweise von zumindest 130 Hz und besonders bevorzugt von zumindest nahezu 160 Hz aufweisen. Es sind jedoch auch andere, einem Fachmann als sinnvoll erscheinende Werte für die Pulsdauer und/oder für die Frequenz des gepulsten Lichts denkbar. Dadurch kann eine vorteilhaft zuverlässige Orientierung des autonomen Serviceroboters innerhalb des Arbeitsbereichs in einem Betriebszustand erreicht werden.

Zudem wird vorgeschlagen, dass das zumindest eine Beleuchtungselement der optischen Erfassungsvorrichtung zumindest teilweise zu einer Ausleuchtung eines Erfassungsbereichs zumindest teilweise mittels Infrarotlichts vorgesehen ist. Unter einem "Infrarotlicht" sollen in diesem Zusammenhang elektromagnetische Wellen, insbesondere Licht, im Spektralbereich insbesondere zwischen1 mm und 780 nm, verstanden werden. Dadurch kann eine bevorzugt zuverlässige Orientierung des autonomen Serviceroboters innerhalb des Arbeitsbereichs in einem Betriebszustand und insbesondere eine vorteilhaft gute Personenüberwachung bei Dunkelheit erreicht werden und zudem eine Beeinträchtigung von Personen, die sich in der Nähe des autonomen Serviceroboters aufhalten, durch das zumindest eine Beleuchtungselement vermieden werden.

Des Weiteren wird vorgeschlagen, dass die optische Erfassungsvorrichtung eine Gestensteuerungseinheit umfasst, die zu einer Steuerung anhand zumindest einer mittels der optischen Erfassungsvorrichtung erfassten Geste eines Bedieners vorgesehen ist. Die Geste des Bedieners ist zumindest teilweise von einem Handzeichen gebildet. Dadurch kann eine bevorzugt einfache und vorteilhaft bedienerfreundliche Steuerung und Bedienung des autonomen Serviceroboters erreicht werden.

Zudem wird ein System mit zumindest einer Basisstation und mit zumindest einem autonomen Serviceroboter vorgeschlagen.

Es wird vorgeschlagen, dass die Basisstation zumindest einen Reflektionsbereich aufweist, insbesondere zumindest teilweise mit einem Reflektanzlack beschichtet ist. Der Reflektionsbereich kann hierbei als Spiegelsystem, als optisches Muster, wie beispielsweise ein Katzenaugenmuster o. dgl., ausgebildet sein. Unter einem "Reflektanzlack" soll in diesem Zusammenhang insbesondere ein Material verstanden werden, das in einem beschichteten Zustand der Basisstation dazu vorgesehen ist, zumindest teilweise eine Oberfläche zu bilden, die dazu vorgesehen ist, insbesondere zumindest 30 %, vorzugsweise zumindest 50 % und besonders bevorzugt zumindest 70 % des auftreffenden Lichts unter einem Reflexionswinkel, der zumindest im Wesentlichen einem Einfallswinkel entspricht, zurückzustrahlen. Dadurch kann eine vorteilhaft einfache Orientierung des autonomen Serviceroboters, insbesondere bei einem Zurückfahren des autonomen Serviceroboters zu der Basisstation und/oder bei einem Andocken, erreicht werden.

Zudem wird vorgeschlagen, dass das System zumindest ein Reflexionselement aufweist, das zumindest einen Reflektionsbereich, insbesondere zumindest teilweise eine Beschichtung aus einem Reflektanzlack, umfasst und das zumindest teilweise zu einer Orientierung des zumindest einen autonomen Serviceroboters vorgesehen ist. Unter einem "Reflexionselement" soll in diesem Zusammenhang insbesondere ein Element verstanden werden, das zumindest teilweise eine Oberfläche aufweist, die dazu vorgesehen ist, insbesondere zumindest 30 %, vorzugsweise zumindest 50 % und besonders bevorzugt zumindest 70 % des auftreffenden Lichts unter einem Reflexionswinkel, der zumindest im Wesentlichen einem Einfallswinkel entspricht, zurückzustrahlen. Dadurch kann eine vorteilhaft gute Lokalisierung und Orientierung des autonomen Serviceroboters innerhalb des Arbeitsbereichs in einem Betriebszustand erreicht werden sowie vorzugsweise auf einen Begrenzungsdraht zur Begrenzung des Arbeitsbereichs des autonomen Serviceroboters verzichtet werden.

Des Weiteren wird vorgeschlagen, dass das zumindest eine Reflexionselement als Bake ausgebildet ist. Das zumindest eine Reflexionselement wird vorzugsweise als Landmarke genutzt. Dadurch kann eine konstruktiv einfache und vorteilhaft kostengünstige Ausgestaltung des zumindest einen Reflexionselements erreicht werden.

Der erfindungsgemäße autonome Serviceroboter soll hierbei nicht auf die oben beschriebene Anwendung und Ausführungsform beschränkt sein. Insbesondere kann der erfindungsgemäße autonome Serviceroboter zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen autonomen Serviceroboter mit einer optischen Erfassungsvorrichtung in einer schematischen Draufsicht und
- Fig. 2: ein System mit dem autonomen Serviceroboter, mit einer Basisstation und mit mehreren Reflexionselementen in einer schematischen Darstellung.

### Beschreibung des Ausführungsbeispiels

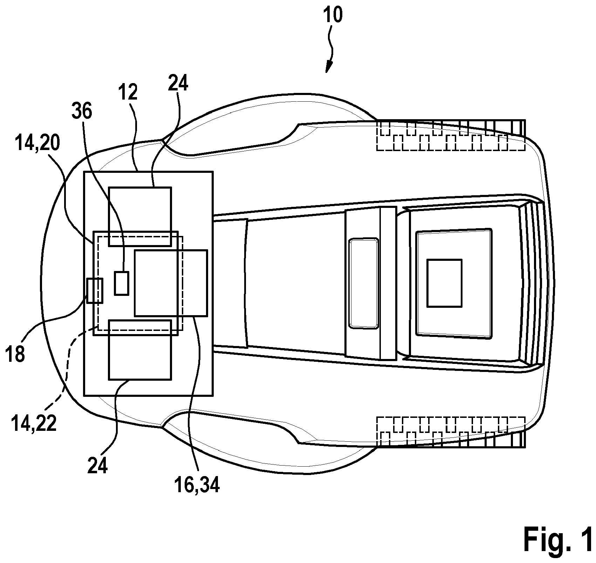

In Figur 1 ist ein autonomer Serviceroboter 10 dargestellt. Der autonome Serviceroboter 10 ist als autonomer Rasenmäher ausgebildet. Der autonome Serviceroboter 10 ist dazu vorgesehen einen Arbeitsbereich 32 zu mähen. Der Arbeitsbereich 32 ist von einer Wiese bzw. einem Rasen eines Gartens gebildet. Grundsätzlich wäre jedoch auch denkbar, dass der autonome Serviceroboter 10 von einem Staubsaugerroboter oder einem anderen, einem Fachmann als sinnvoll erscheinenden Serviceroboter gebildet ist und der Arbeitsbereich 32 dementsprechend beispielsweise von einem Raum gebildet ist. Ferner kann der autonome Der autonome Serviceroboter 10 auch für mehrere Arbeitsbereiche 32 programmiert werden. Die verschiedenen Arbeitsbereiche 32 können dabei separat gespeichert werden und je nach derzeitigem Standort des autonomen Serviceroboters 10 separat angewählt werden.

Der autonome Serviceroboter 10 weist eine optische Erfassungsvorrichtung 12 auf, die zu einer Umfelderfassung in einem Betriebszustand des autonomen Serviceroboters 10 vorgesehen ist. Die optische Erfassungsvorrichtung 12 umfasst eine Laufzeitmesseinheit 14, die zumindest teilweise zur Umfelderfassung des autonomen Serviceroboters 10 mittels einer Laufzeitmessung vorgesehen ist. Die optische Erfassungsvorrichtung 12 ist zumindest teilweise zu einer Ebenen- und/oder Hinderniserkennung vorgesehen. Die optische Erfassungsvorrichtung 12 ist zu einer Ebenenerkennung und zu einer Hinderniserkennung in einem Betriebszustand des autonomen Serviceroboters 10 durch eine Gewinnung von Tiefendaten vorgesehen. Die optische Erfassungsvorrichtung 12 ist zu einer Erfassung von hochauflösenden Tiefendaten aus einer Umgebung des autonomen Serviceroboters 10 vorgesehen. Bei der Ebenenerkennung durch die optische Erfassungsvorrichtung 12 kann ein Freiraum vor dem autonomen Serviceroboter 10 sowie der zu befahrende bzw. zu bearbeitende Arbeitsbereich 32 des autonomen Serviceroboters 10 erkannt und abgeschätzt werden. Zudem können Abweichungen von einer Ebene, wie beispielsweise eine Stufe und/oder ein Graben, erkannt werden. Bei der Hinderniserkennung durch die optische Erfassungsvorrichtung 12 können statische und/oder dynamische Hindernisse erkannt werden. Bei der Hinderniserkennung durch die optische Erfassungsvorrichtung 12 können sowohl statische als auch dynamische Hindernisse erkannt und somit umfahren werden. Insbesondere durch die Vielzahl der erfassten Daten der optischen Erfassungsvorrichtung 12 können vorteilhafte Navigationsstrategien erreicht und die erfassten dynamischen Hindernisse durch speziell angepasste Wendemanöver umfahren werden.

Mittels der optischen Erfassungsvorrichtung 12 wird eine Umgebung des autonomen Serviceroboters 10 erfasst und anschließend kartographiert, sodass der autonome Serviceroboter 10 in einem Betriebszustand innerhalb des Arbeitsbereichs 32 geführt werden kann. Hierfür weist die optische Erfassungsvorrichtung 12 eine Steuerund/oder Regeleinheit 16 auf, die zu einer Auswertung zumindest einer erfassten Information vorgesehen ist. Die Steuer- und/oder Regeleinheit 16 der optischen Erfassungsvorrichtung 12 ist als Steuereinheit 34 ausgebildet, die zur Auswertung der von der optischen Erfassungsvorrichtung 12 erfassten Informationen vorgesehen ist. Die Steuereinheit 34 umfasst einen nicht dargestellten µ-Controller. Die Steuereinheit 34 ist dazu vorgesehen, aus den erfassten Informationen gemäß eines hinterlegten Steueralgorithmus einen Bearbeitungsablauf, nach dem der autonome Serviceroboter 10 den Arbeitsbereich 32 bearbeiten soll, zu berechnen und zu erstellen. Dabei sollen Hindernisse und Stufen erkannt und umfahren werden.

Die optische Erfassungsvorrichtung 12 umfasst ein Weitwinkeloptikelement 18 und ein Zoomelement 42. Das Weitwinkeloptikelement 18 und das Zoomelement 42 der optischen Erfassungsvorrichtung 12 sind einstückig ausgebildet. Das Weitwinkeloptikelement 18 der optischen Erfassungsvorrichtung 12 umfasst eine optische Linse. Das Weitwinkeloptikelement 18 und das Zoomelement 42 der optischen Erfassungsvorrichtung 12 sind dazu vorgesehen, einen Bildbereich von innerhalb eines Winkels, der größer ist, als es dem natürlichen Eindruck des menschlichen Auges entspricht. Das Weitwinkeloptikelement 18 der optischen Erfassungsvorrichtung 12 erfasst einen diagonalen Bildwinkel, der mehr als 60 ° beträgt. Der diagonale Bildwinkel des Weitwinkeloptikelements 18 der optischen Erfassungsvorrichtung 12 beträgt 90 °. Es sind jedoch auch andere, einem Fachmann als sinnvoll erscheinende Ausgestaltungen des Weitwinkeloptikelements 18 denkbar. Durch den Einsatz des Weitwinkeloptikelements 18 kann ein vorteilhaft großes Sichtfeld und ein bevorzugt großer Erfassungsbereich 26 in einem Betriebszustand des autonomen Serviceroboters 10 abgedeckt werden.

Die optische Erfassungsvorrichtung 12 umfasst eine Time-of-Flight-Kamera 20. Die optische Erfassungsvorrichtung 12 ist zumindest teilweise von der Time-of-Flight-Kamera 20 gebildet. Die Time-of-Flight-Kamera 20 ist zu einer dreidimensionalen Erfassung der Umgebung des autonomen Serviceroboters 10 mittels der Laufzeitmessung vorgesehen ist. Die optische Erfassungsvorrichtung 12 umfasst ferner zumindest ein Beleuchtungselement 24, das zumindest teilweise zu einer Ausleuchtung des Erfassungsbereichs 26 der optischen Erfassungsvorrichtung 12 zumindest teilweise mittels eines gepulsten Lichts vorgesehen ist. Das Beleuchtungselement 24 der optischen Erfassungsvorrichtung 12 ist zudem zu einer Ausleuchtung eines Erfassungsbereichs 26 zumindest teilweise mittels Infrarotlichts vorgesehen. Die optische Erfassungsvorrichtung 12 weist zwei Beleuchtungselemente 24 auf, die zu einer Ausleuchtung des Erfassungsbereichs 26 der optischen Erfassungsvorrichtung 12 mittels eines gepulsten Lichts vorgesehen sind. Die Beleuchtungselemente 24 sind jeweils von einer LED gebildet. Die Beleuchtungselemente 24 sind jeweils von einer Infrarot-LED gebildet. Die Beleuchtungselemente 24 emittieren in einem Betriebszustand Licht in einem nicht sichtbaren Infrarotbereich. Dadurch ist die optische Erfassungsvorrichtung 12 auch nachts zu einer Umfelderfassung sowie zu einer Überwachung bzw. zu einer Personenerkennung geeignet. Das von den Beleuchtungselementen 24 emittierte Licht ist gepulst und wird mit einer Frequenz ausgesendet, die in etwa 160 Hz beträgt. Es sind jedoch auch andere, einem Fachmann als sinnvoll erscheinende Ausgestaltungen und/oder Frequenzen des zumindest einen Beleuchtungselements 24 der optischen Erfassungsvorrichtung 12 denkbar. Die Time-of-Flight-Kamera 20 weist eine Sensoreinheit 36 auf, die zu einer Erfassung der von der Umgebung des autonomen Serviceroboters 10 reflektierten Lichtpulse vorgesehen ist. Die Sensoreinheit 36 der Time-of-Flight-Kamera 20 weist mehrere nicht dargestellte photoempfindliche Elemente auf, die für die Erfassung jeweils eines Bildpunktes bzw. Pixels vorgesehen sind. Die photoempfindlichen Elemente sind jeweils von einer Fotodiode gebildet. Ferner umfasst die Time-of-Flight-Kamera 20 ein nicht dargestelltes Filterelement, das zu einer Filterung von bestimmten Wellenlängen von einfallendem Licht vorgesehen ist. Die Time-of-Flight-Kamera 20 der optischen Erfassungsvorrichtung 12 ist als "PMD Cam-Board nano"-Kamera ausgebildet. Es sind jedoch auch andere, einem Fachmann als sinnvoll erscheinende Ausgestaltungen der Time-of-Flight-Kamera 20 denkbar.

In einem Betriebszustand des autonomen Serviceroboters 10 senden die Beleuchtungselemente 24 Lichtimpulse aus, die von der Umgebung des autonomen Serviceroboters 10 reflektiert werden. Diese reflektierten Lichtpulse werden von dem Weitwinkeloptikelement 18 gebündelt und über das Filterelement der Time-of-Flight-Kamera 20 zu der Sensoreinheit 36 geleitet. Die Sensoreinheit 36 der Time-of-Flight-Kamera 20 und die Beleuchtungselemente 24 sind jeweils mit der Steuereinheit 34 der optischen Erfassungsvorrichtung 12 verbunden. Anhand einer Messung der Laufzeit, die zwischen einem Aussenden der Lichtpulse durch die Beleuchtungselemente 24 bis zu einem Auftreffen auf die photoempfindlichen Elemente vergeht, kann eine Entfernung der optischen Erfassungsvorrichtung 12 zu jeweils einem Bildpunkt der Umgebung des autonomen Serviceroboters 10 berechnet werden. Mit jedem der photoempfindlichen Elemente der Sensoreinheit 36 der Time-of-Flight-Kamera 20 kann die Entfernung zu einem Bildpunkt ermittelt werden, sodass eine komplette Szene der Umgebung aus mehreren Bildpunkten zeitgleich erfasst werden kann. Die Entfernung des Bildpunktes ist proportional zur Laufzeit des Lichtpulses.

Die optische Erfassungsvorrichtung 12 kann zudem zu einer Gestensteuerung des autonomen Serviceroboters 10 durch einen Bediener vorgesehen sein. Die optische Erfassungsvorrichtung 12 umfasst eine Gestensteuerungseinheit 44, die zu einer Steuerung anhand zumindest einer mittels der optischen Erfassungsvorrichtung 12 erfassten Geste eines Bedieners vorgesehen ist. Hierzu kann die Time-of-Flight-Kamera 20 der optischen Erfassungsvorrichtung 12 die dynamischen Bewegungen von Extremitäten des Bedieners im Erfassungsbereich 26 der optischen Erfassungsvorrichtung 12 erkennen und mit vorgegebenen und hinterlegten Bewegungsmustern abgleichen. Sobald ein vorgegebenes Bewegungsmuster erkannt wurde kann ein dazu hinterlegter Befehl durch den autonomen Serviceroboter 10 ausgeführt werden. Dadurch kann eine vorteilhaft bedienerfreundliche und einfache Steuerung des autonomen Serviceroboters 10, wie beispielsweise ein aktives Zurückschicken des autonomen Serviceroboters 10 zu einer Basisstation 28 oder ein Starten einer Aufnahme eines Arbeitsbereichs 32 des autonomen Serviceroboters 10, erreicht werden.

Alternativ ist es auch denkbar, dass die optische Erfassungsvorrichtung 12 einen Laserscanner 22 umfasst, der die bereits beschriebene Time-of-Flight-Kamera 20 ersetzt.

Es ist jedoch auch denkbar, dass die optische Erfassungsvorrichtung 12 sowohl zumindest einen Laserscanner 22 als auch zumindest eine Time-of-Flight-Kamera 20 umfasst und/oder ein anderes, einem Fachmann als sinnvoll erscheinendes, insbesondere dreidimensionales, Kamerasystem umfasst. Eine Funktion des Laserscanners 22 der optischen Erfassungsvorrichtung 12 entspricht zu einem Großteil der bereits beschriebenen Funktion der Time-of-Flight-Kamera 20. Die Funktion des Laserscanners 22 unterscheidet sich von der bereits beschriebenen Funktion der Time-of-Flight-Kamera 20 lediglich darin, dass der Laserscanner 22 den Erfassungsbereich 26 der Umgebung des autonomen Serviceroboters 10 abtastet und aus den einzelnen, zeitlich nacheinander abgetasteten Bildpunkten oder Bildlinien ein gesamtes Bild der Umgebung des autonomen Serviceroboters 10 zusammensetzt.

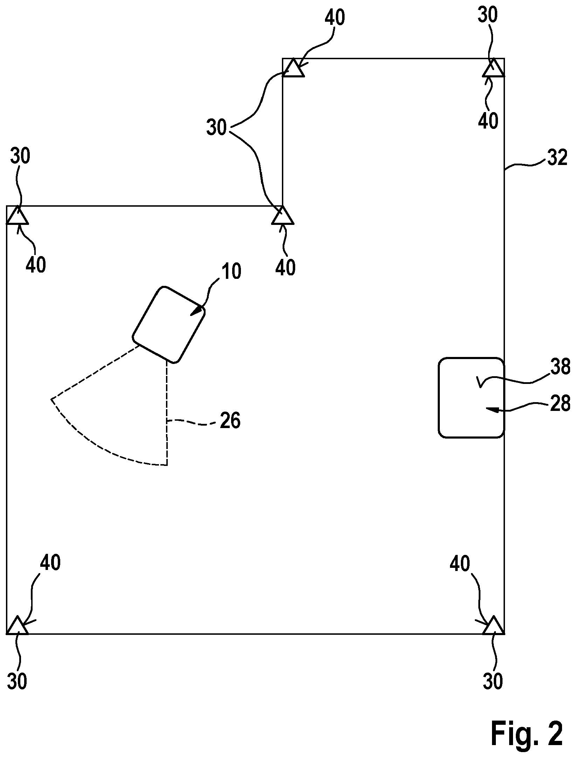

Zudem ist ein System vorgesehen, das der autonome Serviceroboter 10 und die Basisstation 28, mit der der autonome Serviceroboter 10 koppelbar ist und mittels der ein Akku des autonomen Serviceroboters 10 mit elektrischer Energie aufladbar ist. Das System ist in Figur 2 schematisch dargestellt. Die Basisstation 28 weist einen Reflektionsbereich auf, insbesondere eine Beschichtung 38 mit einem Reflektanzlack. Der Reflektanzlack ist dazu vorgesehen, die von dem Beleuchtungselement 24 des autonomen Serviceroboters 10 ausgesendeten Lichtimpulse vorteilhaft stark zu reflektieren, sodass die Time-of-Flight-Kamera 20 die Basisstation 28 bevorzugt schnell und vorteilhaft zuverlässig finden kann. Ferner umfasst das System zumindest ein Reflexionselement 30, das zumindest einen Reflektionsbereich aufweist, insbesondere zumindest teilweise eine Beschichtung 40 aus einem Reflektanzlack umfasst und das zumindest teilweise zu einer Orientierung des autonomen Serviceroboters 10 vorgesehen ist. Das System umfasst mehrere Reflexionselemente 30, die zu einer Orientierung des autonomen Serviceroboters 10 innerhalb des Arbeitsbereichs 32 vorgesehen sind. Die Reflexionselemente 30 sind jeweils von einer Bake gebildet. Es sind jedoch auch andere, einem Fachmann als sinnvoll erscheinende Ausgestaltungen der Reflexionselemente 30 denkbar. Die als Baken ausgebildeten Reflexionselemente 30 weisen zumindest teilweise eine hochreflektive Oberfläche auf. Durch die Reflexionselemente 30 kann eine vorteilhaft gute Lokalisierung und Orientierung des autonomen Serviceroboters 10 innerhalb des Arbeitsbereichs 32 in einem Betriebszustand erreicht werden. Dadurch kann vorzugsweise auf einen Begrenzungsdraht zur Begrenzung des Arbeitsbereichs 32 des autonomen Serviceroboters 10 verzichtet werden.

## Patentansprüche

1. Autonomer Serviceroboter, insbesondere autonomer Rasenmäher oder autonomer Staubsauger, mit einer optischen Erfassungsvorrichtung (12) zu einer Umfelderfassung, wobei die optische Erfassungsvorrichtung (12) eine Laufzeitmessungseinheit (14) aufweist, die zumindest teilweise zu einer Umfelderfassung mittels einer Laufzeitmessung vorgesehen ist, wobei mittels der optischen Erfassungsvorrichtung (12) eine Umgebung des autonomen Serviceroboters erfasst wird und anschließend kartographiert wird, sodass der autonome Serviceroboter in einem Betriebszustand innerhalb eines Arbeitsbereichs(32) führbar ist, wobei die optische Erfassungsvorrichtung (12) eine Steuer- und/oder Regeleinheit (16) aufweist, die zu einer Auswertung zumindest einer erfassten Information vorgesehen ist, **dadurch gekennzeichnet, dass** die optische Erfassungsvorrichtung (12) zu einer Erstellung einer topographischen Karte vorgesehen ist, die Informationen zu Höhen und/oder Maßstab und/oder Untergrundbeschaffenheiten und möglichen Hindernissen aus dem Arbeitsbereich (32) und/oder Arbeitsbereichsgrenzen umfasst.

2. Autonomer Serviceroboter nach Anspruch 1, **dadurch gekennzeichnet, dass** die optische Erfassungsvorrichtung (12) zumindest teilweise zu einer Ebenenund/oder Hindernisserfassung vorgesehen ist.

3. Autonomer Serviceroboter nach einem der vorhergehenden Ansprüche, **dadurch gekennzeichnet, dass** die optische Erfassungsvorrichtung (12) zumindest ein Weitwinkeloptikelement (18) und/oder ein Zoomelement (42) umfasst.

4. Autonomer Serviceroboter nach einem der vorhergehenden Ansprüche, **dadurch gekennzeichnet, dass** die optische Erfassungsvorrichtung (12) zumindest eine Time-of-Flight-Kamera (20) umfasst.

5. Autonomer Serviceroboter nach einem der vorhergehenden Ansprüche, **dadurch gekennzeichnet, dass** die optische Erfassungsvorrichtung (12) zumindest einen Laserscanner (22) umfasst.

6. Autonomer Serviceroboter nach einem der vorhergehenden Ansprüche, **dadurch gekennzeichnet, dass** die optische Erfassungsvorrichtung (12) zumindest ein Beleuchtungselement (24) umfasst, das zumindest teilweise zu einer Ausleuchtung eines Erfassungsbereichs (26) der optischen Erfassungsvorrichtung (12) vorgesehen ist.

7. Autonomer Serviceroboter nach einem der vorhergehenden Ansprüche, **dadurch gekennzeichnet, dass** die optische Erfassungsvorrichtung (12) zumindest ein Beleuchtungselement (24) umfasst, das zumindest teilweise zu einer Ausleuchtung eines Erfassungsbereichs (26) der optischen Erfassungsvorrichtung (12) zumindest teilweise mittels eines gepulsten Lichts vorgesehen ist.

8. Autonomer Serviceroboter nach Anspruch 7, **dadurch gekennzeichnet, dass** das zumindest eine Beleuchtungselement (24) der optischen Erfassungsvorrichtung (12) zumindest teilweise zu einer Ausleuchtung eines Erfassungsbereichs (26) zumindest teilweise mittels Infrarotlichts vorgesehen ist.

9. Autonomer Serviceroboter nach einem der vorhergehenden Ansprüche, **dadurch gekennzeichnet, dass** die optische Erfassungsvorrichtung (12) eine Gestensteuerungseinheit (44) umfasst, die zu einer Steuerung anhand zumindest einer mittels der optischen Erfassungsvorrichtung (12) erfassten Geste eines Bedieners vorgesehen ist.

10. System mit zumindest einer Basisstation (28) und mit zumindest einem autonomen Serviceroboter nach einem der vorhergehenden Ansprüche.

11. System nach Anspruch 10, **dadurch gekennzeichnet, dass** die Basisstation (28) zumindest einen Reflektionsbereich aufweist, insbesondere teilweise mit einem Reflektanzlack beschichtet ist.

12. System nach Anspruch 10 oder 11, **gekennzeichnet durch** zumindest ein Reflexionselement (30), das zumindest einen Reflektionsbereich, insbesondere teilweise eine Beschichtung (40) aus einem Reflektanzlack, umfasst, und das zumindest teilweise zu einer Orientierung des zumindest einen autonomen Serviceroboter vorgesehen ist.

13. System zumindest nach Anspruch 12, **dadurch gekennzeichnet, dass** das zumindest eine Reflexionselement (30) als Bake ausgebildet ist.

## Claims

1. Autonomous service robot, in particular autonomous lawnmower or autonomous vacuum cleaner, comprising an optical detection device (12) for detecting surroundings, the optical detection device (12) having a time-of-flight measuring unit (14) provided at least in part for detecting surroundings by means of a time-of-flight measurement, with surroundings of the autonomous service robot being detected by means of the optical detection device (12) and subsequently being mapped such that the autonomous service robot in an operational state is able to be guided within a work region (32), with the optical detection device (12) having an open-loop and/or closedloop control unit (16) provided for the evaluation of at least one detected information item, **characterized in that** the optical detection device (12) is provided for the creation of a topographic map which comprises information regarding heights and/or scale and/or nature of the ground and possible obstacles in the work region (32) and/or work region boundaries.

2. Autonomous service robot according to Claim 1, **characterized in that** the optical detection device (12) is provided at least in part for detecting levels and/or obstacles.

3. Autonomous service robot according to either of the preceding claims, **characterized in that** the optical detection device (12) comprises at least one wide-angle optics element (18) and/or a zoom element (42).

4. Autonomous service robot according to any one of the preceding claims, **characterized in that** the optical detection device (12) comprises at least one time-of-flight camera (20).

5. Autonomous service robot according to any one of the preceding claims, **characterized in that** the optical detection device (12) comprises at least one laser scanner (22).

6. Autonomous service robot according to any one of the preceding claims, **characterized in that** the optical detection device (12) comprises at least one lighting element (24) which is provided at least in part for an illumination of a detection region (26) of the optical detection device (12).

7. Autonomous service robot according to any one of the preceding claims, **characterized in that** the optical detection device (12) comprises at least one lighting element (24) which is provided at least in part for an illumination of a detection region (26) of the optical detection device (12), the said illumination being provided at least in part by means of pulsed light.

8. Autonomous service robot according to Claim 7, **characterized in that** the at least one lighting element (24) of the optical detection device (12) is provided at least in part for an illumination of a detection region (26), the said illumination being provided at least in part by means of infrared light.

9. Autonomous service robot according to any one of the preceding claims, **characterized in that** the optical detection device (12) comprises a gesture control unit (44) which is provided for control on the basis of at least one gesture of an operator detected by means of the optical detection device (12).

10. System having at least one base station (28) and having at least one autonomous service robot according to any one of the preceding claims.

11. System according to Claim 10, **characterized in that** the base station (28) has at least one reflection region, in particular is coated in part with a reflectance lacquer.

12. System according to Claim 10 or 11, **characterized by** at least one reflection element (30) comprising at least one reflection region, in particular in part a coating (40) made of a reflectance lacquer, and provided at least in part for orienting the at least one autonomous service robot.

13. System at least according to Claim 12, **characterized in that** the at least one reflection element (30) is designed as a beacon.

## Revendications

1. Robot de service autonome, notamment tondeuse à gazon autonome ou aspirateur autonome, comprenant un dispositif de détection optique (12) destiné à détecter l'environnement, le dispositif de détection optique (12) comportant une unité de mesure du temps de propagation (14) qui est prévue au moins en partie pour détecter l'environnement au moyen d'une mesure du temps de propagation, le dispositif de détection optique (12) détectant puis cartographiant un environnement du robot de service autonome de sorte que le robot de service autonome puisse être guidé dans un état de fonctionnement à l'intérieur d'une zone de travail (32), le dispositif de détection optique (12) comportant une unité de commande et/ou de régulation (16) qui est prévue pour évaluer au moins une information détectée, **caractérisé en ce que** le dispositif de détection optique (12) est prévu pour créer une carte topographique qui comprend des informations sur les hauteurs et/ou l'échelle et/ou les conditions du sol et d'éventuels obstacles de la zone de travail (32) et/ou des limites de la zone de travail.

2. Robot de service autonome selon la revendication 1, **caractérisé en ce que** le dispositif de détection optique (12) est prévu au moins en partie pour détecter un niveau et/ou un obstacle.

3. Robot de service autonome selon l'une des revendications précédentes, **caractérisé en ce que** le dispositif de détection optique (12) comprend au moins un élément optique grand angle (18) et/ou un élément zoom (42).

4. Robot de service autonome selon l'une des revendications précédentes, **caractérisé en ce que** le dispositif de détection optique (12) comprend au moins une caméra à temps de vol (20).

5. Robot de service autonome selon l'une des revendications précédentes, **caractérisé en ce que** le dispositif de détection optique (12) comprend au moins un scanner laser (22).

6. Robot de service autonome selon l'une des revendications précédentes, **caractérisé en ce que** le dispositif de détection optique (12) comprend au moins un élément d'éclairage (24) qui est prévu au moins en partie pour éclairer une zone de détection (26) du dispositif de détection optique (12).

7. Robot de service autonome selon l'une des revendications précédentes, **caractérisé en ce que** le dispositif de détection optique (12) comprend au moins un élément d'éclairage (24) qui est prévu au moins en partie pour éclairer une zone de détection (26) du dispositif de détection optique (12) au moins en partie au moyen d'une lumière pulsée.

8. Robot de service autonome selon la revendication 7, **caractérisé en ce que** l'au moins un élément d'éclairage (24) du dispositif de détection optique (12) est prévu au moins en partie pour éclairer une zone de détection (26) au moins en partie au moyen d'une lumière infrarouge.

9. Robot de service autonome selon l'une des revendications précédentes, **caractérisé en ce que** le dispositif de détection optique (12) comprend une unité de commande gestuelle (44) qui est prévue pour effectuer une commande sur la base d'au moins un geste d'un opérateur détecté au moyen du dispositif de détection optique (12).

10. Système comprenant au moins une station de base (28) et au moins un robot de service autonome selon l'une des revendications précédentes.

11. Système selon la revendication 10, **caractérisé en ce que** la station de base (28) comporte au moins une zone réfléchissante, notamment partiellement revêtue d'une peinture réfléchissante.

12. Système selon la revendication 10 ou 11, **caractérisé par** au moins un élément de réflexion (30) qui comprend au moins une zone de réflexion, notamment partiellement un revêtement (40) obtenu à partir d'une peinture réfléchissante, et qui est prévu au moins en partie pour orienter ledit au moins un robot de service autonome.

13. Système au moins selon la revendication 12, **caractérisé en ce que** l'au moins un élément réfléchissant (30) est conçu comme une balise.
